# EUROPEAN PATENT SPECIFICATION

(11) **EP 1 076 487 B1**
(45) Date of publication and mention of the grant of the patent: **27.02.2002**
(21) Application number: 99917017.8
(22) Date of filing: 07.05.1999
(51) Int. Cl.: A01K 63/04

(54) **PUMP ASSEMBLY WITH PIVOTABLE DEFLECTOR, IN PARTICULAR FOR FILTERS, TANKS AND AQUARIA**
PUMPENANORDNUNG MIT SCHWENKBAREM DEFLEKTOR, INSBESONDER FÜR FILTER, BEHÄLTER UND AQUARIEN
ENSEMBLE POMPE A DEFLECTEUR PIVOTANT, NOTAMMENT POUR FILTRES, RESERVOIRS ET AQUARIUMS

(30) Priority: 08.05.1998 IT VI980097
(43) Date of publication of application: 21.02.2001
(73) Proprietor: Eden S.R.L., 36100 Vicenza (IT)
(72) Inventor: LOLATO, Samuele, I-36020 Solagna (IT)
(74) Representative: Vannini, Mario
(86) International application number: IB9900823
(87) International publication number: WO9957971

(56) References cited:
- DE-A- 2 412 748
- DE-A- 3 520 362
- US-A- 3 865 729
- US-A- 4 944 457

## Description

### Technical field

The present invention relates to the technical field of pumps and filters for aquaria and tanks of various types, and particularly for a pump assembly with a pivotable deflector.

### Background art

The known pumps for tanks and aquaria of the "under sand " type or mounted on filters comprise essentially a pressure chamber where a bladed propeller is located which is moved by an electrical motor. The pressure chamber is provided with an inlet and an outlet aperture.

Generally, downstream of the outlet aperture, there is provided a device which is commonly called a deflector and which is sometimes misnamed as a diffuser, which is used to orientate the outgoing flow towards a preferential direction, possibly associated to a tap or a flow reducer. The known deflectors can normally be orientated manually by pivoting the same about an axis of the inlet aperture, see for example EP-A-0 857 420.

A problem of such known pump and deflector assemblies resides in the stagnation phenomena of the liquid in specific zones of the tank, caused by the reduction or lack of local circulation. A consequence of the above-mentioned phenomena is the insufficient or inadequate water oxygenation or lack of filtration of the stagnant liquid.

The traditional deflectors of the pivotable type which can be orientated do not provide a solution for such problems if the orientation of the assembly or of the deflector is not manually varied. Obviously, such solution depends on the will of the user and therefore it is unreliable and unsafe. Moreover, it is not possible to eliminate completely the stagnation phenomena in some particular zone where obstacles are present which could be overcome only by a various or undulatory motion.

A problem associated to the known pump assemblies, mainly related to aquaria, is the steadiness of the circulation inside the tank that differs remarkably from the condition of typical variability of a natural environment. In fact, the well-known pump assemblies cannot reproduce the randomness of the flow of the streams present in a real environment.

From US-A-4944457 an oscillating device is known which is adapted to be interconnected between a water pipe and a nozzle of a shower head, the device generally comprising a housing with an inlet and an outlet, in which an impeller wheel is located in the pathway of the water flow. The nozzle is oscillably mounted and is operatively connected to the impeller wheel through a reduction gear assembly comprising three sets of toothed wheels and an arm to transform the rotary motion of the impeller into a reciprocating motion of the shower head.

This known device is an accessory designed to be connected to a water pipe with the main object to avoid manual oscillation of the shower head, especially to people elderly or suffering from disabilities. Moreover, this known device is conceived to be placed outside of any source of pressurised water and, due to the rather complicated structure of its reduction gear, could not be promptly and easily incorporated in the housing of a water pump in order to solve the above-mentioned problems of stagnation of water and insufficient oxygenation for aquaria.

### Presentation of the invention

A primary aim of the present invention is that of overcoming, or at least of reducing, the above mentioned drawbacks by means of a pump assembly of the type disclosed in the preamble that allows to vary the orientation of the inlet flow in a substantially continuous and automatic manner without any outside intervention of the user.

A particular aim is that of providing a pump assembly allowing the variation of the inlet flow orientation depending on the liquid flow rate.

A further aim is that of providing a pump assembly enabling the reduction of the stagnation phenomena and improvement of liquid filtration.

Another aim is that of creating an inlet flow which reproduces conditions closer to those of the natural habitat.

In accordance with one preferred aspect of the invention, there is provided a pump assembly with a pivotable deflector, particularly for circulation of liquid in filters, tanks and aquaria, comprising a casing having internally thereof an electric motor, a pressure chamber having an inlet aperture and an outlet aperture, a centrifuge pump propeller operated by said electric motor and located within said pressure chamber, a deflector placed downstream of said outlet aperture with variable orientation to direct the outlet flow in a predetermined direction, characterised by actuator means located internally of said housing immediately downstream of said pump propeller, said deflector comprising a nozzle oscillating about an axis staggered with respect to the rotation axis of said pump propeller, said actuator means comprising hydraulic motor means operated by the outlet flow issued by the propeller and mechanically coupled to said oscillating nozzle to impart thereto a continuous and automatic swinging motion.

This embodiment provides the advantage of a more uniform and varied distribution of the liquid in the tank, thus avoiding the creation of stagnation zones and stationary flow inside.

### Brief description of the drawings

Further characteristics and advantages of the invention will become more apparent in the light of the following detailed description of a preferred but not exclusive embodiment of a pump assembly hereafter shown by way of a non-limitative example by means of the accompanying drawings, in which:

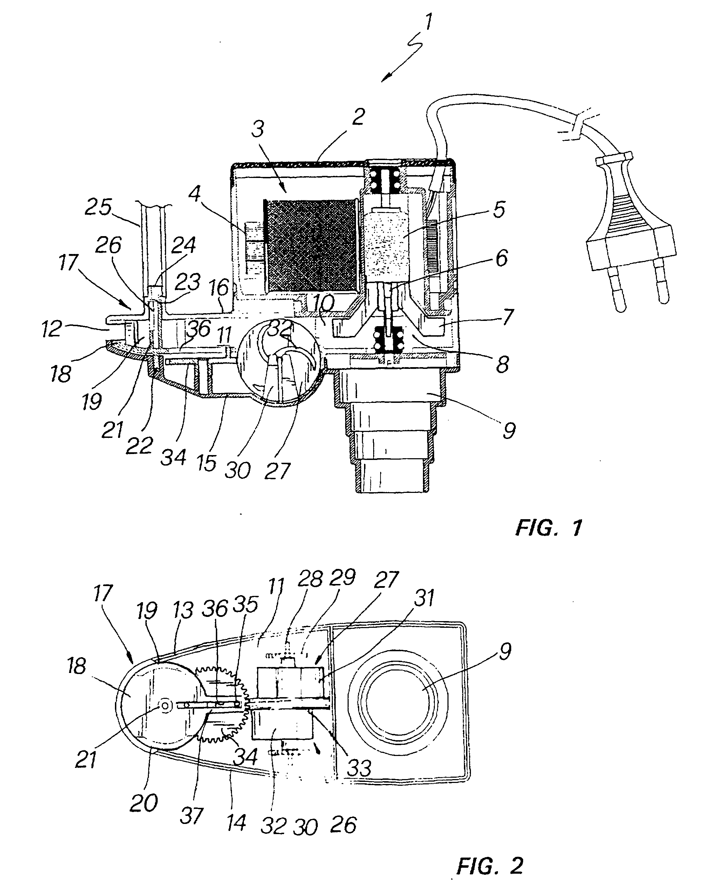

the FIG. 1 shows a partially sectioned lateral view of a pump assembly in accordance with the invention;
the FIG. 2 shows a top view of the device of Fig. 1;

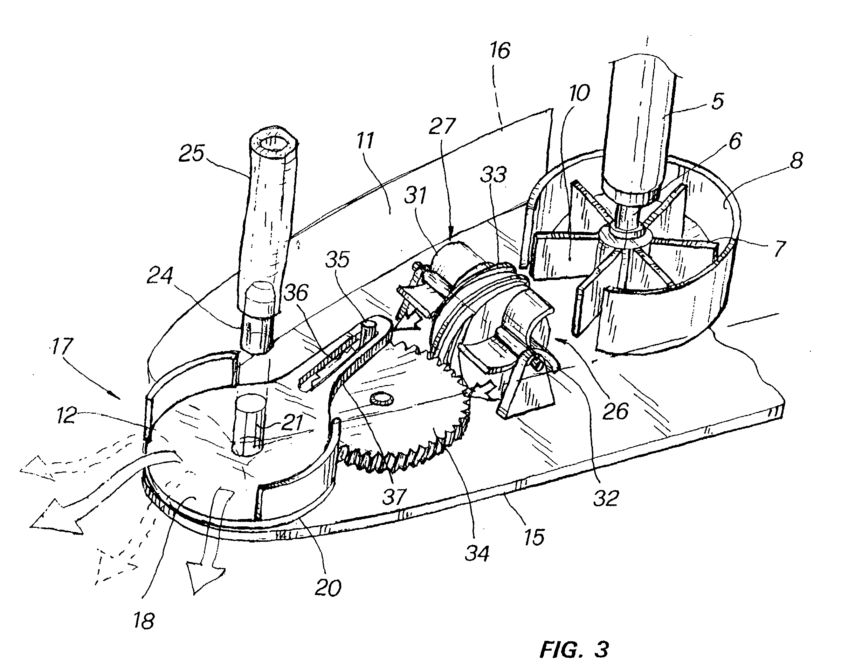

the FIG. 3 represents a perspective and partially exploded view of the device of Fig. 1.

### Description of a preferred embodiment

With reference to the cited figures, a pump assembly for filters, tanks and aquaria, globally referenced with the numeral 1, comprises a watertight cover 2 containing an electromotor 3, of a known type, with a stator 4 and a rotor 5, encapsulated with resins. The rotor 5 is fixed on an axis 6 to which a bladed centrifuge propeller 7 is rigidly coupled.

The propeller 7 is located in a pressing chamber 8 having an aspiration gate or aperture 9 in substantially axial position, adapted to be connected with a filter or immersed in the tank or in the sand, and a gate or outlet aperture 10 in substantially radial position.

Downstream of the pressing chamber 8, an outlet chamber 11 is located and provided with an outflow aperture 12 at the opposite extremity to the propeller 7. The outlet chamber 11 is provided with sides 13, 14 gradually convergent toward the outflow aperture 12, a bottom wall 15 defining also the inflow aperture 9 and a closing wall 16. In the vicinity of the outflow aperture 12 there is located a deflector, generally referenced with the numeral 17, and destined to orientate the flow in a predetermined direction.

According to the invention, there is provided actuator means fit to impart to the deflector 17 a continuous and automatic oscillation produced by the flow of the outgoing liquid.

In particular, the deflector 17 is an oscillating nozzle made by a disc 18 from which lateral walls 19, 20 and a central axis 21 extend. In the attached drawings, the nozzle oscillation axis 21 is fixed and substantially parallel to the axis of the propeller 7.

The lateral walls 19, 20 of the oscillating nozzle 17 have a height slightly lower than the minimum distance between the bottom wall 15 and the cover wall 16 of the outlet chamber 11 so as to guide the outlet flow through the outflow aperture 12.

The oscillation axis 21 is hollow and its lower extremity is accommodated in a seating 22 of the bottom wall 15 of the outlet chamber 11 and the upper extremity in a seating 23 made inside a connection 24 made in the closing wall 16 of the outlet chamber 11 for connecting a small pipe 25 for air feeding. The axis 21 is provided with a slot 26 through which the air flowing through the pipe 25 is conveyed to the oscillating nozzle 13.

Advantageously, the actuator means comprise hydraulic motor means operated by the flow going out from the propeller 7 and mechanically coupled to the oscillating nozzle 17.

Particularly, the cited hydraulic motor means can be constituted by at least one, or preferably two bladed wheels 26, 27, fixed on a common axis 28 mounted on end supports 29, 30 downstream of the outlet aperture 10. Each wheel 26, 27 is provided with a respective series of blades 31, 32 substantially radial or slightly curved that result aligned to the outlet aperture of the pressing chamber 8 so as to determine respective turbines with tangential action.

Advantageously, the hydraulic motor means is mechanically coupled to the oscillating nozzle 17 by motion reducer and transformer means for transforming motion from continuous rotating into alternating.

In particular, the reducing means can be constituted by a gear drive of a worm gear 33 and cogwheel 34 type . The worm shaft 33 is fixed to the wheels 26, 27 and to the common axis 28, while the cogwheel 34 is mounted on an axle 35 anchored in the bottom wall 15 of the outlet chamber 11.

The motion transformation means can be constituted by a crank and slotted mechanism made of a pin 35 fixed in eccentric position on the cogwheel 34 and slidably engaging a guide slot 36 made in a radial extension 37 of disc 18 of the oscillating nozzle 17.

Alternatively, the motion transformation means will be such to produce an oscillation of the nozzle 17 on reciprocally perpendicular planes. To this end, besides the crank and slotted mechanism, cam means can be provided, not shown in the drawings, constituted for example by an inclined or shaped surface formed on the upper surface of the cogwheel 34. To allow the oscillation of the nozzle 17 in two orthogonal planes, the latter can be bound to the bottom wall 15 by means of a ball pin, also not shown in the drawings.

In correspondence of the inflow channel 9 of the pressing chamber 8 there is provided a shutter 38 to regulate the ingoing flow.

Operatively, the fluid entering through the admission channel 9 in the pressing chamber 8 is accelerated by the radial blade propeller 7. The liquid leaves the pressing chamber 8 through the outlet channel 10 and transfers part of its energy to the bladed wheel 26, 27. The rotation of the axis 28 is transmitted to the cogwheel 34 by the worm shaft 33 and is transformed into oscillation of the nozzle 17 by means of the crank and slotted mechanism 35 constituted by the wheel 34 and the slot 36 of the radial extension 37.

Therefore, the oscillation of the nozzle 17 is produced by the flow outgoing from the pump assembly.

It is observed that the passage section between the front end of the lateral walls 19, 20 of the nozzle 17 is partially occluded by the flanks 13, 14 of the outlet chamber in correspondence of the side end positions. Thus, in such positions the average pressure of the fluid will be lower than that of the central position of the nozzle, corresponding to the maximum flow position.

Regulating the ingoing flow rate through the shutter 38 it is possible to vary the momentum transferred to the bladed wheel 26, 27 and then the oscillation frequency of the nozzle 17 about the axis 21.

The contents of Italian Patent Application No VI98A000097, for which priority is claimed, are incorporated herein by reference.

## Claims

1. Pump assembly with pivotable deflector, particularly for circulation of liquid in filters, tanks and aquaria, comprising a casing (2) having internally thereof an electric motor (3), a pressure chamber (8) having an inlet aperture (9) and an outlet aperture (10), a centrifuge blade pump propeller (7) operated by said electric motor (3) and located within said pressure chamber (8), a deflector (17) placed downstream of said outlet aperture (10) with variable orientation to direct the outlet flow in a predetermined direction, **characterised by** actuator means (26-37) located internally of said housing immediately downstream of said pump propeller (7), said deflector (17) comprising a nozzle oscillating about an axis (21) staggered with respect to the rotation axis of said pump propeller (7), said actuator means comprising hydraulic motor means (26-32) operated by the outlet flow issued by said pump propeller (7) and mechanically coupled to said oscillating nozzle (17) to impart thereto a continuous and automatic swinging motion produced by the flow of the outgoing liquid

2. Pump assembly according to claim 1, **characterised by** the fact that said hydraulic motor means (26-33) comprise at least a wheel (26, 27) with substantially radial blades (31, 32) fixed on an axis (28) placed downstream of said outlet channel (10).

3. Pump assembly according to the claim 2, **characterised by** the fact that said hydraulic motor means (26-32) is mechanically coupled to said oscillating nozzle (17) by reduction means (33, 34) and means (35-37) for the transformation of the motion from continuous rotating to oscillating.

4. Pump assembly according to claim 3, **characterised by** the fact that said reduction means comprises a gear torque of the worm gear type (33, 34).

5. Pump assembly according to the claim 1, **characterised by** the fact that the oscillation axis (21) of said nozzle (17) is substantially fixed and parallel to the axis of the propeller.

6. Pump assembly according to the claim 1, **characterised by** the fact that said oscillation axis (21) is connected to the bottom of said outlet chamber by means of a spheric articulation.

7. Pump assembly according to claim 6, **characterised by** the fact that said motion (35-37) transformation means comprise a crank and slotted mechanism (35) connected to said cogwheel (34) and engaged in a slot ofa radial guide (36) of said oscillating nozzle (17).

8. Pump assembly according to claim 6, **characterised by** the fact that said motion (35-37) transformation means comprise cam means to impart an oscillation to said nozzle in planes reciprocally perpendicular around said spheric articulation.

9. Pump assembly according to claim 1, **characterised by** the fact that said oscillating nozzle (17) and said actuators means (26-37) are located in an outlet chamber (11) located downstream and communicating with said pressure chamber (8).

10. Pump assembly according to the claim 9, **characterised by** the fact that said outlet chamber (11) presents an outflow aperture (12) in correspondence of which said oscillating nozzle (17) is located.

11. Pump assembly according to the claim 10, **characterised by** the fact that said oscillating nozzle (17) is provided with lateral walls (19, 20) adapted to co-operate with said outflow aperture (12) to reduce the outlet flow in correspondence of its angular end run position.

12. Pump assembly according to the claim 4, **characterised by** the fact of providing a wheel (26, 27) with substantially radial blades fixed on a common axis (28) with the interposition of said worm (33) gear.

## Patentansprüche

1. Pumpenanordnung mit schwenkbarem Deflektor, insbesondere für die Umwälzung von Flüssigkeit in Filtern, Behältern und Aquarien mit einem Gehäuse (2), in dessen Inneren ein Elektromotor (3), eine Druckkammer (8) mit einer Zufuhröffnung (9) und einer Auslaßöffnung (10), ein Zentrifugal-Blatt-Pumpenantrieb (7), der von dem Elektromotor (3) betrieben wird und in der Druckkammer (8) angeordnet ist, ein Deflektor (17), der stromabwärts von der Auslaßöffnung (10) angeordnet und schwenkbar ist, um den Ausfluß in eine vorbestimmte Richtung zu lenken, vorgesehen ist
**dadurch gekennzeichnet**, d a ß Betätigungseinrichtungen (26 - 37) im Inneren des Gehäuses unmittelbar stromabwärts von dem Pumpenantrieb (7) angeordnet sind, wobei der Deflektor (17) einen Vorsprung aufweist, der versetzt bezüglich der Rotationsachse des Pumpenantriebs (7) um eine Achse 21 schwingt, wobei die Betätigungseinrichtungen hydraulische Motoreinrichtungen (26 - 32) aufweisen, die von dem Ausfluß betrieben werden, der von dem Pumpenantrieb (7) hervor gebracht ist, und mechanisch verbunden sind mit dem schwingenden Vorsprung (17), um diesem eine kontinuierliche und automatisch schwingende Bewegung aufzuprägen, die verursacht ist von der Strömung der abfließenden Flüssigkeit.

2. Pumpenanordnung gemäß Anspruch 1, **dadurch gekennzeichnet, dass** die hydraulische Motoreinrichtungen (26 - 32) mindestens ein Rad (26, 27) aufweisen mit im wesentlichen radialen Blättern (31, 32), die an einer Achse (28) befestigt sind, die stromabwärts von dem Auslasskanal (10) angeordnet sind.

3. Pumpenanordnung gemäß Anspruch 2, **dadurch gekennzeichnet, dass** die hydraulische Motoreinrichtung (26 - 32) mechanisch verbunden ist mit dem schwingenden Vorsprung (17) mittels Reduktionseinrichtungen (33, 34) und Einrichtungen (35 - 37) für die Umwandlung von einer kontinuierlich rotierenden zu einer schwingenden Bewegung.

4. Pumpenanordnung gemäß Anspruch 3, **dadurch gekennzeichnet, dass** die Reduktionseinrichtungen (33, 34) ein Rotationsgetriebe von dem Typ eines Schneckengetriebes (33, 34) aufweisen.

5. Pumpenanordnung gemäß Anspruch 1, **dadurch gekennzeichnet, dass** die Schwingungsachse (21) des Vorsprungs (17) im wesentlichen fest und parallel zu der Achse des Antriebs ist.

6. Pumpenanordnung gemäß Anspruch 1, **dadurch gekennzeichnet, dass** die Schwingungsachse (21) verbunden ist mit dem Boden der Ausflusskammer mittels eines räumlichen Gelenks.

7. Pumpenanordnung gemäß Anspruch 6, **dadurch gekennzeichnet, dass** die Einrichtungen (35 - 37) zur Umwandlung der Bewegung eine Kurbel und einen geschlitzten Mechanismus (35) umfassen, die verbunden sind mit dem Zahnrad (34), und in einen Schlitz einer radialen Führung (36) des schwingenden Vorsprungs (17) eingreifen.

8. Pumpenanordnung gemäß Anspruch 6, **dadurch gekennzeichnet, dass** die Einrichtungen (35 - 37) zur Umwandlung der Bewegung Nockeneinrichtungen aufweisen, um dem Vorsprung eine Schwingung aufzuprägen in Ebenen, die reziprok senkrecht um dieses räumliche Gelenk sind.

9. Pumpenanordnung gemäß Anspruch 1, **dadurch gekennzeichnet, dass** der schwingende Vorsprung (17) und die Betätigungseinrichtungen (26 - 37) in einer Auslasskammer (11) unmittelbar stromabwärts von und in Verbindung mit der Druckkammer (8) angeordnet sind.

10. Pumpenanordnung gemäß Anspruch 9, **dadurch gekennzeichnet, dass** die Auslasskammer (11) eine Ausflussöffnung (12) aufweist entsprechend der der schwingende Vorsprung (17) angeordnet ist.

11. Pumpenanordnung gemäß Anspruch 10, **dadurch gekennzeichnet, dass** der schwingende Vorsprung (17) mit seitlichen Wänden (19, 20) versehen ist, die ausgebildet sind, um mit der Ausflussöffnung (12) zusammen zu wirken, um den Ausfluß entsprechend von dessen End-Schwenk-Betriebsstellung zu reduzieren.

12. Pumpenanordnung gemäß Anspruch 4, **dadurch gekennzeichnet, dass** ein Rad (26, 27) vorgesehen ist mit im wesentlichen radialen Blättern, die an einer gemeinsamen Achse (28) mit dem dazwischen angeordneten Schneckengetriebe (35) befestigt sind.

## Revendications

1. Ensemble de pompe possédant un déflecteur pivotant, en particulier pour la circulation de liquide dans des filtres, réservoirs et aquariums, comprenant un boîtier (2) ayant intérieurement un moteur électrique (3), une chambre de pression (8) qui présente une ouverture d'entrée (9) et une ouverture de sortie (10), une hélice de pompe centrifuge à pales (7), actionné par ledit moteur électrique (3), et placé dans ladite chambre de pression (8), un déflecteur (17) placé en aval de ladite ouverture de sortie (10), avec une orientation variable pour diriger le courant de sortie dans une direction prédéterminée, **caractérisée par** des moyens actionneurs (26-37) placés à l'intérieur dudit boîtier immédiatement en aval de ladite hélice de pompe (7), ledit déflecteur (17) comprenant une buse qui oscille autour d'un axe (21) déporté par rapport à l'axe de rotation de ladite hélice de pompe (7), lesdits moyens actionneurs comprenant des moyens moteurs hydrauliques (26-32) actionnés par le courant de sortie débité par ladite hélice de pompe (7) et couplés mécaniquement à ladite buse oscillante (17) pour lui imprimer un mouvement oscillant continu et automatique produit par le courant du liquide sortant.

2. Ensemble de pompe selon la revendication 1, **caractérisé en ce que** lesdits moyens moteurs hydrauliques (26-33) comprennent au moins une roue (26, 27) munie de palettes (31, 32) sensiblement radiales fixées sur un axe (28) placé en aval dudit canal de sortie (10).

3. Ensemble de pompe selon la revendication 2, **caractérisé en ce que** lesdits moyens moteurs hydrauliques (26-32) sont couplés mécaniquement à ladite buse oscillante (17) par des moyens de réduction (33, 34) et par des moyens (35-37) pour la transformation du mouvement d'un mouvement continu à un mouvement oscillant.

4. Ensemble de pompe selon la revendication 3, **caractérisé en ce que** lesdits moyens de réduction comprennent un couple d'engrenages du type à roue à vis sans fin (33, 34).

5. Ensemble de pompe selon la revendication 1, **caractérisé en ce que** l'axe d'oscillation (21) de ladite buse (17) est sensiblement fixe et parallèle à l'axe de l'hélice.

6. Ensemble de pompe selon la revendication 1, **caractérisé en ce que** ledit axe d'oscillation (21) est relié au fond de ladite chambre de sortie au moyen d'une articulation à rotule.

7. Ensemble de pompe selon la revendication 6, **caractérisé en ce que** lesdits moyens de transformation du mouvement (35-37) comprennent un mécanisme à manivelle et fente (35) relié à ladite roue dentée (34) et engagé dans une fente d'un guide radial (36) de ladite buse oscillante (17).

8. Ensemble de pompe selon la revendication 6, **caractérisé en ce que** lesdits moyens de transformation du mouvement (35-37) comprennent des moyens à came destinés à imprimer une oscillation à ladite buse dans des plans mutuellement perpendiculaires autour de ladite articulation à rotule.

9. Ensemble de pompe selon la revendication 1, **caractérisé en ce que** ladite buse oscillante (17) et lesdits moyens actionneurs (26-37) sont placés dans une chambre de sortie (11) placée en aval de ladite chambre de pression (8) et communiquent avec cette chambre.

10. Ensemble de pompe selon la revendication 9, **caractérisé en ce que** ladite chambre de sortie (11) présente une ouverture de courant de sortie (12) en correspondance de laquelle ladite buse oscillante (17) est placée.

11. Ensemble de pompe selon la revendication 10, **caractérisé en ce que** ladite buse oscillante (17) est munie de parois latérales (19, 20) adaptées pour coopérer avec ladite ouverture de courant de sortie (12) pour réduire le courant de sortie dans sa position angulaire de fin de course.

12. Ensemble de pompe selon la revendication 4, **caractérisé en ce qu'**il comprend une roue (26, 27) munie de palettes sensiblement radiales fixées sur un axe commun (28) avec interposition de ladite vis sans fin (33).
